Europäisches Patentamt

European Patent Office

Office européen des brevets

(19)

(11) EP 1 347 289 A2

(12) **EUROPEAN PATENT APPLICATION**

(43) Date of publication:
24.09.2003 Bulletin 2003/39

(51) Int Cl.$^7$: **G01N 25/18**, G01K 17/20

(21) Application number: 03388018.8

(22) Date of filing: 21.03.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **22.03.2002 DK 200200441**

(71) Applicant: **Soerensen, Lars Schioett**
**3480 Fredensborg (DK)**

(72) Inventor: **Soerensen, Lars Schioett**
**3480 Fredensborg (DK)**

(54) **Heat transmission coefficient measuring apparatus**

(57) The invention relates to a method and an apparatus for measuring heat transmission coefficients for building elements.

The apparatus is arranged in a way that it lead the heat loss from the object-to-be-tested to a conductive plate, called a heat absorption sensor (3) or sensor plate made of copper. The increase of temperature in this sensor plate is measured with sensor gages (7). The heat transfer to the sensor plate (3) is happening during a complex, and in this context new utilized thermal interplay between an air gap (1) as a convector, an absorption foil (2), the heat absorption sensor (3), a reflector (4) and a heat insulator (5). The apparatus design and signal treatment (8) use this interplay and a U-value is calculated for the object-to-be-tested.

1. Air gap as convective layer
2. Foil as absorption layer
3. Heat absorption sensor as absorption and conducting layer
4. Coating as reflecting layer
5. Plate as insulating layer
6. Handle
7. Temperature sensor gages
8. Signal treatment in electronics
9. Signal cabeling
10 Object-to-be-tested

Figure 1

Printed by Jouve, 75001 PARIS (FR)

## Description

U-value measurements are made in laboratories today, among others, during assistance of heat current measurers and heat conductivity apparatus. These laboratory measure-ments are very complicated and rather laborious to do, because the object-to-be-tested, could be a wall element or a window, first of all has to be transported to the laboratory and after that, mounted into the test arrangement designed for the experiment. Now, a controlled amount of energy, resulting in a rise in temperature, has to be supplied to the test arrangement, in order to initiate an essentially heat transfer in the object-to-be-tested.

The heat transfer gained this way, though, is not in a stable process for a very long period after the experiment is started. During this phase we talk about an in steady heat transfer process. Fouriers equation of heat conduction, $\Phi = k \cdot \triangledown T$, is not usable in this situation. There has to be reached a steady state, i.e. the heat transfer during the obejct-to-be-tested has to be at a constant level when a constant temperature difference is put on before a real measuring can start. This steady state can take several hours, even days to achieve. The duration of time until a steady state situation is reached, primary depends on the thermal inerti of the object-to-be-tested, i.e. material based properties as heat capacity, density, thermal conductivity and the thickness of the material. After that, the measuring is often carried out during measurements of the heat flux for a short or relative long period of time. This is done by means of measurements in test arrangements which are very voluminous, often several cubic meters. The heat flux is measured by hold a constant temperature level on the heat receiving side, i.e. the cold side, of the object-to-be-tested. If we have a object-to-be-tested with only one layer of material, a glass layer for instance, then a heat conductivity apparatus is sufficient in order to determination of the materials practically heat conductivity. A steady state process and a test arrangement is still necessary, though.

The basis of finding these practically heat conductivities is therefore laboratory based measurements on conditionised test speciment brought into steady state by means of a plate apparatus with a protective ring or with a heat current measurer after DS/EN 12664 eller DS/EN 12667. The material is previously brought into moisture equilibrium in air with relative humidity of 35-50 per cent. The results from the measurements refer to a mean temperature of 10 oCelsius. The limitations are that only, simply homogeneous one-layer structures can be measured. Common for the abovementioned measuring methods is implicit a problem about a transition insulation factor on the two sides of the object-to-be-tested respectively. Thus, the surface temperatures of the object-to-be-tested are not identical to the air temperatures very just apart (i.e. very near) the surfaces of the object-to-be-tested. This problem is addressed on different ways be the state-of-the-art technology and with more or less accuracy.

There exist some test arrangements that can be brought to a building where the heat loss or a thermal conductivity is searched. For instance US Patent 4173894, a temperature sensing device adapted to maximize heat transfer from a selected location to the device and US Patent 6257761 which is a insulating measuring apparatus which forces heat flow in one direction with a constant temperature region. Incorporated is an electronically controlled heating device used to form a region of constant high tempera-ture on one side of the insulating material, and causes most of the heat transfer to concentrate in a longitudinal heat flux, which flow across the direction of the thickness of object-to-be-tested, to achieve the effect of one-dimensional heat transfer. Of others types can be mentioned the following US 4647221, DE 19516480, US 4236403, FR 2671185 and EP 0065433.

Non of these above mentioned apparatus or arrangements accords to a measuring device for heat transmission coefficients, transmission coefficients or thermal con-duc-ti-vities where an air gap is provided between the measurement surface and a sensor plate (heat absorption sensor) as done in this invention. Furthermore, several of these mentioned existing apparatus forces the heat through the object-to-be-tested via different electronic equipments techniques. Other measures an electrical resistance between the surfaces of the object-to-be-tested according to the temperature difference between the two surfaces and gain an estimate of the heat transmission coefficient calculated from this observed electrical resistance. A rather inaccurate result is obtained this way.

Finally, on most of the reported existing apparatus, is necessary to mount some of the test equipment on the object-to-be-tested leaving some cracks, drill holes on the object. For all of the existing apparatus there are direct contact between the heat absorption sensor (sensor plate) and the surface of the object-to-be-tested, and thereby a serious failure occur on the result because of the mentioned transition insulation factor caused by the air gained insulating effect near the surfaces.

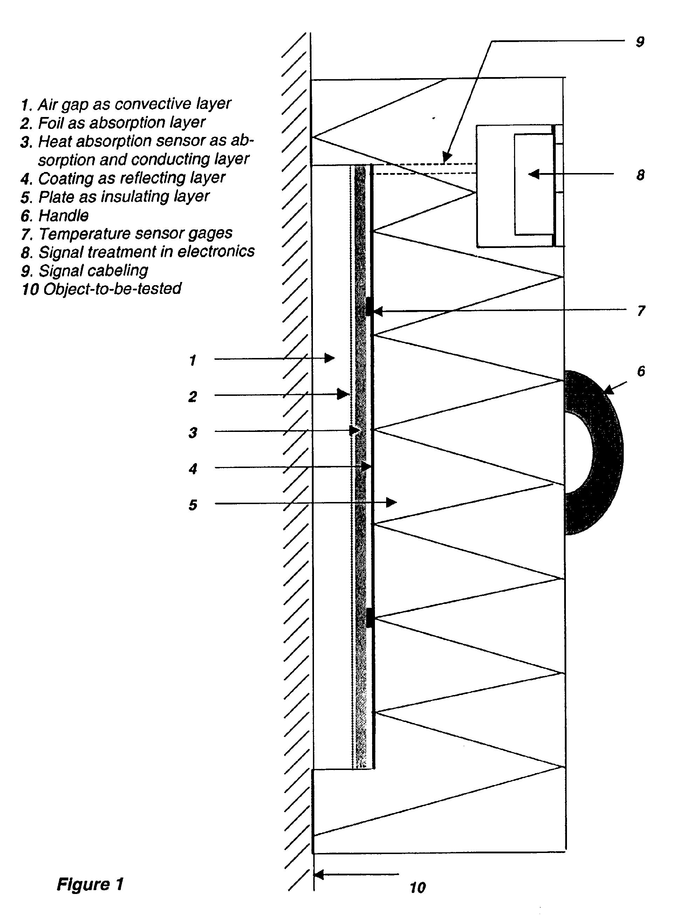

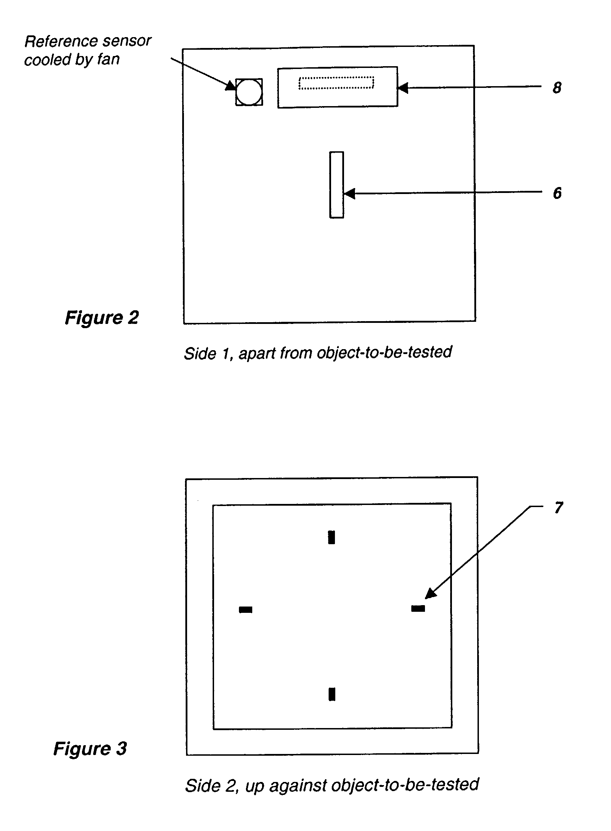

There do not exist any commercial U-value meter on the market. The invention is explained in more details in the following where references are made to the figures. Figures 1, 2 and 3 shows the principal in the apparatus (U-value meter).

This invention is based on a principle where the heat (energy in transit during the object-to-be-tested) is "trapped" by a heat sensor, also called a heat absorption sensor (copper plate) 3 when it leaves the out door surface of the object-to-be-tested.

A plate of metal, i.e. the copper plate or so called "heat absorption sensor" 3 with a very high thermal diffusivity and high conductivity receives the heat flux (heat loss) from the object-to-be-tested. The internal energy level of the heat absorption sensor is measured, continuously 7, 8, during a relative short measuring period and from the relatively enhancement of energy level the U-value can be calculated. The system is separated form the surrounding world with a high insulating material 5, with low thermal diffusivity and low conductivity.

The heat transfer can occur by thermal radiation, conduction and convection and the apparatus is designed to ensure, that all of these three energy parts are trapped by the sensor plate (heat absorption sensor). In fact, for windows, the heat loss during radiation can be as much as about 70 per cent of the total heat loss for the window. However, this value can be reduced drastic by a special coating on the glazing and windows with and without these coatings should be handled sober by the U-value meter.

Thermal radiation can be transferred to a receiving medium on three ways for solids and two ways for gases. For the solids, there can be a reflection, a transmission and absorption of the receiving energy. For the gases the transfer of thermal radiation can happen by transmission and absorption alone.

Conduction is a type of molecular oscillation transport and is in contrast to radiation that is electromagnetic energy transport. Therefore, conduction needs a medium (solid, gas or a liquid) to be transmitted in. Radiation can be transferred in total vacuum. In the U-value meter it is chosen to transform the heat conduction from conduction in a solid to convection in a fluid (an air gap 1 in front of the copper plate is included to do this). i.e. the transfer process to the heat absorption sensor (copper plate 1) is changed from traditional conduction to convection during the air gap. Lets consider this air gap technique in more detail:

For all known apparatus measuring heat transmission coefficients for building elements, emphasis is on generation of direct contact between the outer surface of the building part and the heat absorption sensor (copper plate) which temperature has to be measured in order to determinate the heating of this, originated from the heat loss from the building element (object-to-be-tested).

This invention is based on a comprehension that a failure comes up, when the heat absorption plate is in direct contact with the object-to-be-tested. The failure is due to a missing insulating effect from a so called transition insulation factor which is a measure of the air generated insulation effect near all surfaces. This air generated insulation effect is, in fact, a very important part of the heat transmission coefficient for typical building objects. Of this reason the invention operate with an air gap between the object-to-be-tested and the heat absorption (copper plate) unit. The resulting temperature in the heat absorption sensor is used to calculate the heat transmission coefficient. Knowledge about the indoor as well as the outdoor temperature is needed. Therefore, a reference temperature sensor is incorporated in the apparatus measuring the outdoor temperature continuous. It is important to secure that the temperature of the heat absorption sensor is identical with the outdoor temperature just before a heat transmission coefficient measurement is initiated.

The heat absorption sensor is coated with a material with high heat absorption capacity and low emission to secure a quick and effective heat transfer from the object-to-be-tested to the heat absorption sensor. This heat transfer is happening during convection as well as a thermal radiation process via the air gap. Following this procedure, there is not ongoing any heat transfer from the surface of the object-to-be-tested to the heat absorption sensor by direct contact, and therefore, the transition insulation factor of the object-to-be-tested is measured and included in the final calculation of the heat transmission coefficient.

By this new "air gap" technique, developed with this invention, the problem with the transition insulation factor and the described problematic surface temperature is eliminated, resulting in much more accurate results. At the same time, geometrically inaccuracy at the surface of the object-to-be-tested is eliminated by the air gap. These would, by direct contact, result in a bad heat conduction between the two surfaces, i.e. between the object-to-be-tested and the copper plate.

In order to ensure, that all thermal radiation from the object-to-be-tesed is led into the copper plate 3 (the heat absorption sensor) there is mounted a coating 2 with main properties as high absorption and low emission. The coating is placed on the side of the copper plate facing the object-to-be-tested.

On the opposite side of the copper plate 3, i.e. apart from the object-to-be-tested there is placed a reflecting layer 4, to ensure that the energy transmitted to the copper plate is trapped and kept inside during the testing time.

Behind the reflecting foil is an heat insulating layer 5 made in a relative thick dimension and with low thermal conductivity and diffusivity as basic thermal properties.

It should be mentioned that the heat flux form the convective layer 1, during the absorption layer 2, and into the heat absorption sensor (copper plate) 3 is happening during a complex, non linear process and the heat transfer number vary as a function of the transmission time (test time) with the equation $\sqrt{\lambda \rho c / t}$ $\lambda$ is the thermal conductivity, p is the density and c is the specific heat capacity for the heat absorption sensor (copper plate) 3 with the coating 2 on. t is the time in seconds.

With this invention a very good accuracy is achieved for measuring of U-values. The accuracy of the results is in between +/- 5 per cent from the "correct" result according to information from different producers of building components. The measurements are done much quicker, via this invention, than we have seen previously. Furthermore the measurements can be done in situ (on site) instead of in a laboratory. There is no requirement of mounting of test equipment on the object-to-be-tested and the steady state heat loss process is achieved for an existing building already.

The period of measuring is only 20 seconds and afterwards is used approximately half a minute to save the result, get thermal balance, and go to the next location.

After that a new measurement can go on. The apparatus is relative small, around 270mm x 270mm x 90 mm and the weight is less than 1,5 kilogram. It is mobile equipment. The apparatus is furthermore very easy to use during a total of seven bottoms.

Another advantage of the invention is that the practical U-values are measured on the site, i.e. the real and current value of transmission coefficients for the particular building in focus and not the "new building element" U-value. This is important of several reasons. First of all a building element (an outer wall for instance) the moisture content has changed during the time (several years may be) the element has been a part of the building. The moisture will influence more or less on the U-value, depending of the relative humidity and the type of material in focus. Furthermore the insulation in an outer wall can "fall down" a bit during the years resulting in bad insulating effect. For windows the glazing can puncture and the insulating effect is reduced significant.

Finally the invention is based on a different measuring principle compared to the other known techniques. Thus we do not have to keep a constant temperature around the object-to-be-tested as the case is in the typical laboratory tests. The problem with transition insulation factor is eliminated and we do not have to put on any electric current over the two sides of the object-to-be-tested.

Summary:

- A steady state heat loss process is utilized
- The transition insulation factor problem is solved, i. e. measured implicit (via the air gap/convector techniques)
- An enthalpy based physical measuring principle is utilized
- Practical, current U-values (heat transmission coefficients) are measured
- No need to measure in the laboratory but outside the building.
- The measurements are done quickly
- Mobile equipment
- Easy to do the measurements and operate the apparatus
- Now need for any mounting of equipment on the object-to-be-tested.
- The apparatus is handy and the weight is less than 1.5 kilogram.

The invention can be realized relative easy. There exist a prototype at the time this is written. A series of measurements is done showing very good accuracy. When measurements are repeated the same results occur. Measurements are carried out where measuring were done on objects with known U-values. The accuracy of the results was in the interval +/- 5 per cent of the correct values.

The invention can be realized by producing heat absorption sensors (copper plates) in dimension corresponding to the selection (in the proto type 222mm x 222mm, thickness 0.3 mm is selected).

The relative thin plate dimension ensure a significant temperature rise in the sensor plate (copperplate) 3. The sensor plate is mounted or placed up against a heat insulating plate 5 made of Polystyrene in the prototype. The thickness of this plate is 90 mm in the prototype. This insulating plate 5 has a 3 mm lowered plane in where the sensor plate is placed, resulting in a approximately 3 mm air gap between the sensor plate and the surface of the object-to-be-tested.

Between the sensor plate 3 and the insulating plate 5 is placed a very thin reflecting layer 4 made of a highly reflecting material and with poor heat capacity. A precious metal is perfect but aluminium is quite good as well and used in the prototype. The reflecting layer 4 reduce the heat lost during transmission through the sensor plate 3 which could, with no reflecting layer, have been lost during absorption in the insulating plate 5 behind the sensor plate.

On the opposite side of the sensor plate, i.e. the side against the object-to-be-tested is mounted a thin absorption coating made out of a highly absorbing material with a very low emission. In the proto type is selected a surface treated nickel foil. The absorption layer 2 will ensure, that a maximum of the heat loss from the object-to-be-tested is transported to the sensor plate 3.

On the side of the copper plate 3 (sensor plate) apart from the object-to-be-tested, is mounted a number of temperature sensor gages 7. These sensor gages are able to measure the temperature rise in the sensor plate (copper plate) 3 with a very high precision. The sensors are of the type ETG-50B/E and are nickel based. ETG-Series gages are fabricated with high-purity nickel foil sensing grids, and are used to monitor temperatures in strain gage work and related applications. These gages are open-faced construction with a 1 mil (0,03 mm) tough, flexible polyimide backing. The temperature measuring interval is -195 °C to +230 °C. The sensors are mounted to the sensor plate (copper plate) 3 with high-temperature epoxy adhesives for best performance. The temperature sensors is protected after mounting with protective suitable coating and is applied just after gage installation. M-M Protective Coatings is used.

During the measuring period the temperature-signals are exported to the processor placed in the electronics 8.

Measured values are used in a system of equations where care is taken of the thermal properties of the sensor plate (copper plate) 3, the mass, the out door temperature, the increase in the temperature of the sensor plate, the heat capacity and a un linear convective transfer coefficient. Furthermore the properties of the object-to-be-tested as section, area, temperatures near the two sides and the measuring time. Measuring signals are treated by the processor, and a result on the U-value is the outcome. In the following, a description of the measuring procedure is given and after that, the different components according to the diagram of the electronics is described.

Measuring procedure:

1. The in door and out door temperatures are measured, and during the data Aquisition System the values are given as input to the main processor. In fact, the out door temperature is continuous measured by the reference sensor and can be displayed at any time the apparatus is turned on.

2. It the apparatus is just brought outside from an in door environment, the display will give the user a signal to "wait with measuring" until the apparatus is in thermal equilibrium with the out door temperature. While waiting, the apparatus display the difference between the out door and the heat absorption sensor's temperature.

3. When thermal equilibrium is reached, the display says "Ready to measure" and the user can initiate the measurement. If the user, by a failure, turn the apparatus against the sun, resulting in a thermal rise in the heat absorption sensor, the processor will gain the message "Wait..." again, indicating lack of thermal balance.

4. When the user hold the apparatus up against the object-to-be-tested, the main processor start to count the time and the measuring process is ongoing for the entire measuring period (20 seconds). The display says "Measuring..." while measuring ongoes.

5. Immediate after the measurement is finished, the display say "Calculate..." for a few seconds (1-2 seconds) and the U-value is presented afterwards.

6. The user can save the results by the buttom "Memory".

7. The apparatus will display "Wait" until the heat absorption sensor is back in thermal equilibrium with the out door temperature, and after that a new measurement can start.

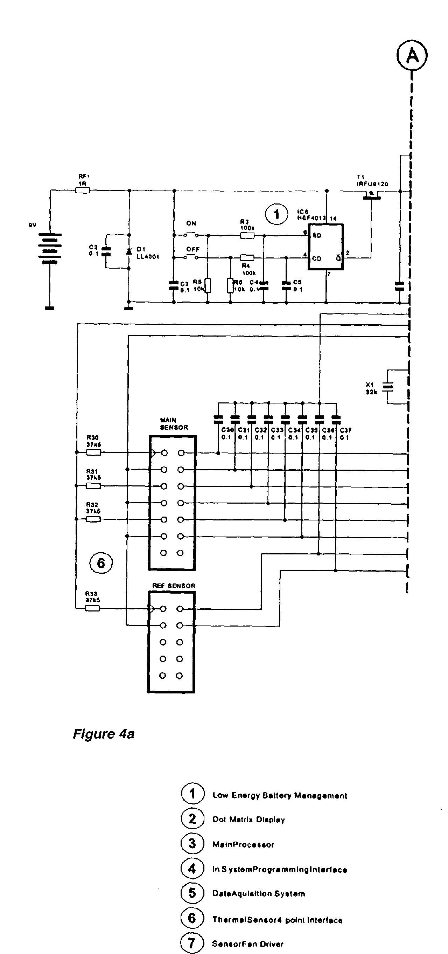

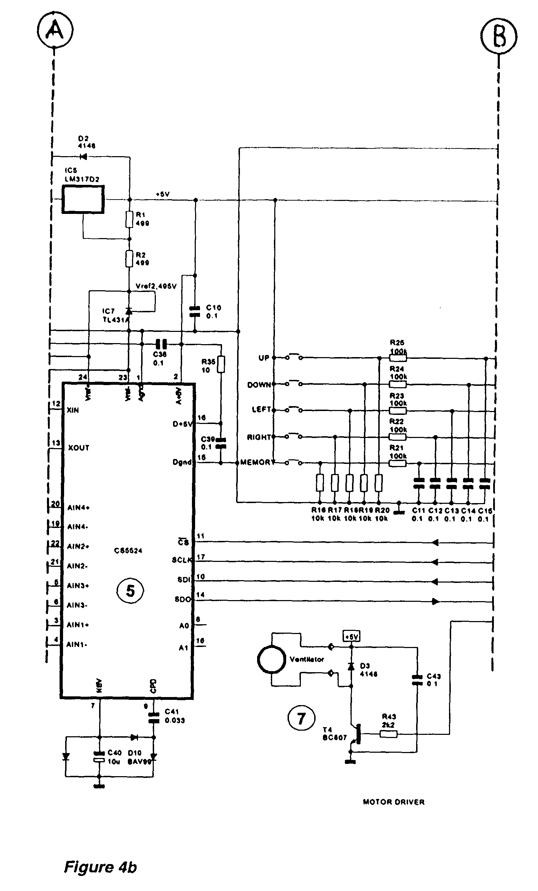

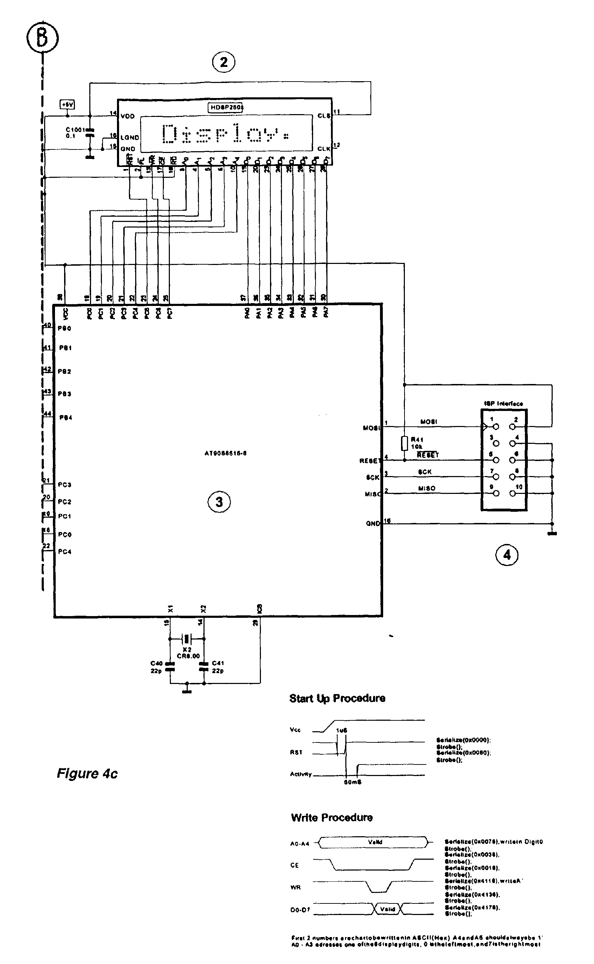

The seven in-circled numbers on the diagram (figure 4a, 4b, 4c):

1. Low energy Battery Management
9 V batteri gives the electric current to all the features of the apparatus.

2. Dot Matrix Display
The display is a LED-display in the colour green, enabeling the light at the frequency of the display emission to pass through.

3. Main processor:
One of the main objectives with the processor is to solve Fouriers heat transfer equation for a situation of stationarity. This equation, on differential form, can be expressed as $\Phi = k \cdot dT/dx$ (for a homogeneous material) representing the heat loss in Joule per second for each square meter of the object-to-be-tested. The apparatus is intended mainly for existing buildings for which stationarity of heat loss are obtained already. The heat loss expressed by the differential equation above is integrated up, in the processor, during a selected measuring period of 20 seconds. The summarised energy is transmitted to, and catched by, the heat absorption sensor during the previous described "five layer system". The total energy transport from the surface of the object-to-be-tested to the surface of the heat absorption sensor happens during two separate processes: 1. during a convective heat transmission process, $\Phi c = h \cdot \Delta(T_{air} - T_{cu})$, where h is the convective heat transmission coefficient and 2. during a thermal radiation process, $\Phi r = \sigma \cdot \varepsilon \cdot F \cdot T$ where $\sigma$ is the Stefan-Boltzmann's constant, $\varepsilon$ the emission of the surface of object-to-be-tested, F is a configuration factor and T is the absolute temperature of the outdoor surface of the object-to-be-tested.

It should be mentioned, that the process of heat transfer to the heat absorption sensor is happening during a clear unlinear process, which is taken care about in the processor as well. The heat transmission coefficient with the physical unit $[W/m^2 \cdot K]$ is obtained this way: The summarised energy in the heat absorption sensor will rise the temperature in the plate to a level corresponding to the new enthalpy level, governed by the product $m_{cu} \cdot c_{cu} \cdot \Delta T_{cu}$. Therefore the rise in enthalpy level should equal the amount of energy transmitted to the heat absorption sensor, $\Sigma(\Phi c + \Phi r)\Delta t$ summarised in the period of measuring. The heat transmission coefficient, defined by $1/U = \Sigma \, dX_i/k_i$ + transition insulation factor (insulance) from the air layer at the inner an outer surfaces. $dX_i$ is the thickness in meter of layer number i in a composite construction, and $k_i$ is that layers corresponding heat conduction coefficient in $[W/m \cdot K]$. The equation: $\Sigma(\Phi c + \Phi r)\Delta t = m_{cu} \cdot C_{cu} \cdot \Delta T_{cu}$ is the resulting equation, and it is solved utilizing knowledge about the following relation, $\Phi = \Phi c + \Phi r = U \cdot A \cdot (T_{in} - T_{out})$. Therefore, before a measurement is started we have to know the inner and outer temperatures, $T_{in}$ and $T_{out}$ respectively. The apparatus is able to measure these automatically as well.

4. In System Programming Interface
An adapter enabeling programming of the apparatus' main processor during the coding language C.

5. Data Aquisition System
Governing of data to and from the main processor.

6. Thermal Sensor 4 point interface
Adaptor for signals from the main sensors placed on the heat absorption sensor and for the reference sensor as well.

7. Sensor Fan Driver
The reference sensor is cooled by a fan.

**Claims**

1.  A method of measuring the heat transmission coefficient of an element of a building such as a wall, roof or window and comprising the steps of:

    -   providing a heat absorption sensor, such as a metal plate, arranged inside an insulating housing having a heat transmission aperture defined by a rim or edge, said sensor being arranged with a first sensor surface facing said aperture located at a spacing distance from said aperture,
    -   measuring the temperature inside and outside said building at or near said element as well as the temperature of said sensor,
    -   placing said housing against the outer element surface of said element with the said rim or edge abutting said surface such that said first sensor surface is spaced from said outer element surface by an air gap with a width substantially equal to said spacing distance, and
    -   subsequently measuring the temperature of said sensor after a certain period of time.

2.  A method according to claim 1, wherein said spacing distance is between 1mm and 12mm, preferably between 1mm and 10mm, more preferably between 1mm and 8mm, even more preferably between 1mm and 6mm, even more preferably between 2mm and 4mm and most preferably between 2.5mm and 3.5mm.

3.  A method according to claim 1 or 2, wherein the configuration and dimensions of first said sensor surface are substantially equal to the configuration and dimensions of said aperture.

4.  A method according to any of the preceding claims, wherein said first sensor surface is covered by a absorption layer or foil having a high coefficient of heat absorption, preferably higher than approx. 0.9 and more preferably higher than approx. 0.95, and a low coefficient of heat emission, preferably lower than approx. 0.15 and more preferably lower than approx. 0.11.

5.  A method according to any of the preceding claims, wherein a second sensor surface of said sensor facing away from said aperture faces a layer or sheet of heat reflecting material such as aluminium.

6.  A method according to any of the preceding claims, wherein the configuration of said rim or edge is such that said rim or edge can abut a plane surface along substantially the entire length of the edge or rim and/or the material of said rim or edge is resilient such that the rim may conform to a certain extent to any irregularities of the surface of said element.

7.  A method according to any of the preceding claims, wherein said heat absorption sensor is a copper plate.

8.  An apparatus for measuring heat transmission coefficients for an element of a building such as a wall, a roof or a window, said apparatus comprising:

    -   an insulating housing having a heat transmission aperture defined by a rim or edge,
    -   a heat absorption sensor, such as a metal plate, arranged inside said insulating housing with a first sensor surface facing said aperture and located at a spacing distance from said aperture such that an air gap will be formed between said first sensor surface and a surface of said element abutting said rim or edge, and
    -   at least one temperature sensor in contact with said heat absorption sensor for measuring the temperature of said heat absorption sensor.

9.  An apparatus according to claim 8, wherein said spacing distance is between 1 mm and 12mm, preferably between 1mm and 10mm, more preferably between 1mm and 8mm, even more preferably between 1mm and 6mm, even more preferably between 2mm and 4mm and most preferably between 2.5mm and 3.5mm.

10. An apparatus according to claim 8 or 9, wherein the configuration and dimensions of said first sensor surface are substantially equal to the configuration and dimensions of said aperture.

11. An apparatus according to any of the claims 8-10, wherein said first sensor surface is covered by a absorption layer or foil having a high coefficient of heat absorption, preferably higher than approx. 0.9 and more preferably higher than approx. 0.95, and a low coefficient of heat emission, preferably lower than approx. 0.15 and more preferably lower than approx. 0.11.

**12.** An apparatus according to any of the claims 8-11, wherein a second sensor surface of said sensor facing away from said aperture faces a layer or sheet of heat reflecting material such as aluminium.

**13.** An apparatus according to any of the claims 8-12, wherein the configuration of said rim or edge is such that said rim or edge can abut a plane surface along substantially the entire length of the edge or rim and/or the material of said rim or edge is resilient such that the rim may conform to a certain extent to any irregularities of the surface of said element.

**14.** An apparatus according to any of the claims 8-13, wherein said heat absorption sensor is a copper plate.

1. Air gap as convective layer
2. Foil as absorption layer
3. Heat absorption sensor as absorption and conducting layer
4. Coating as reflecting layer
5. Plate as insulating layer
6. Handle
7. Temperature sensor gages
8. Signal treatment in electronics
9. Signal cabeling
10 Object-to-be-tested

9

8

7

6

1

2

3

4

5

**Figure 1**

10

Reference sensor
cooled by fan

8

6

**Figure 2**

Side 1, apart from object-to-be-tested

7

**Figure 3**

Side 2, up against object-to-be-tested

Figure 4a

(1) Low Energy Battery Management

(2) Dot Matrix Display

(3) MainProcessor

(4) In S ystemProgrammingInterface

(5) DataAquisition System

(6) ThermalSensor4 point Interface

(7) SensorFan Driver

10

Figure 4b

Figure 4c

**Start Up Procedure**

Vcc

RST

ActivRy

Serialize(0x0000);
Strobe();
Serialize(0x0080);
Strobe();

**Write Procedure**

A0-A4    Valid

CE

WR

D0-D7    Valid

Serialize(0x0076),writein Digit0
Strobe();
Serialize(0x0036);
Strobe();
Serialize(0x0016);
Strobe();
Serialize(0x4116),writeA'
Strobe();
Serialize(0x4136);
Strobe();
Serialize(0x4176);
Strobe();

First 2 numbers arechartobewrittenin ASCII(Hex) A4andA5 shouldalwaysbe 1'
A0 - A3 adresses one oftheBdisplaydigits, 0 istheleftmost,and7istherightmost